(19) Europäisches Patentamt / European Patent Office / Office européen des brevets

(11) **EP 3 967 975 B1**

(12) **FASCICULE DE BREVET EUROPEEN**

(45) Date de publication et mention de la délivrance du brevet:
**26.06.2024 Bulletin 2024/26**

(21) Numéro de dépôt: **21192262.0**

(22) Date de dépôt: **20.08.2021**

(51) Classification Internationale des Brevets (IPC):
**G01C 21/16** *(2006.01)*  **G01C 22/02** *(2006.01)*

(52) Classification Coopérative des Brevets (CPC):
**G01C 21/165; G01C 21/188; G01C 22/02**

(54) **PROCÉDÉ DE DÉTERMINATION DE LA POSITION ET DE L'ORIENTATION D'UN VÉHICULE**

VERFAHREN ZUR POSITIONSBESTIMMUNG UND ORIENTIERUNG EINES FAHRZEUGS

METHOD FOR DETERMINING THE POSITION AND ORIENTATION OF A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.09.2020 FR 2009131**

(43) Date de publication de la demande:
**16.03.2022 Bulletin 2022/11**

(73) Titulaire: **Commissariat à l'énergie atomique et aux énergies alternatives**
**75015 Paris (FR)**

(72) Inventeurs:
- **VILLIEN, Christophe**
  **38054 GRENOBLE (FR)**
- **COMBETTES, Christophe**
  **38054 GRENOBLE (FR)**

(74) Mandataire: **INNOV-GROUP**
**310, avenue Berthelot**
**69372 Lyon Cedex 08 (FR)**

(56) Documents cités:
CN-A- 110 988 951    US-A1- 2017 122 770
US-A1- 2018 087 905

**Description**

L'invention concerne un procédé de détermination de la position et de l'orientation d'un véhicule. L'invention concerne aussi un support d'enregistrement d'informations et un système de localisation pour la mise en oeuvre de ce procédé.

De nombreux procédés de détermination de la position et de l'orientation d'un véhicule sont connus. Par exemple, une présentation de l'état de l'art en la matière peut être trouvée dans la thèse suivante : S. Godha, "Performance Evaluation of Low Cost MEMS-Based IMU Integrated With GPS for Land Vehicle Navigation Application", PhD report, 2006. Par la suite, cette thèse est désignée par l'expression "Godha2006".

Classiquement, un module d'intégration de mesure inertielle construit une position estimée $P_e$ et une orientation estimée $O_e$ du véhicule à partir :

- des mesures d'un accéléromètre et d'un gyromètre embarqués dans le véhicule, et
- de la précédente position et de la précédente orientation déterminées pour ce véhicule.

Ensuite, cette position estimée $P_e$ et cette orientation estimée $O_e$ sont corrigées par un module de correction pour obtenir une position corrigée $P_c$ et une orientation corrigée $O_c$. La position corrigée $P_c$ et l'orientation corrigée $O_c$ sont plus précises et sont délivrées sur une sortie du système de localisation en tant que position et orientation déterminées pour le véhicule. Cette position corrigée $P_c$ et cette orientation corrigée $O_c$ sont également acquises par le module d'intégration puis utilisées par ce module d'intégration comme, respectivement, précédente position et précédente orientation pour construire les prochaines position et orientation estimées du véhicule.

Le module de correction corrige la position $P_e$ et l'orientation $O_e$ en prenant en compte des mesures d'autres capteurs que celles de l'accéléromètre et du gyromètre embarqués. En particulier, les mesures d'un odomètre et, éventuellement, les mesures d'autres capteurs, comme une unité de géolocalisation par satellite, sont utilisées par le module de correction à cette fin.

Typiquement, le module de correction corrige la position $P_e$ et l'orientation $O_e$ en fonction d'un écart entre la mesure de l'odomètre à un instant $to_j$ et une estimation de cette mesure à l'instant $to_j$ obtenue à partir des mesures de l'accéléromètre et du gyromètre relevées à cette instant $to_j$.

Un tel état de la technique est par exemple divulgué dans US2017/122770A1, US2018/087905A1 ou CN110988951A.

L'invention vise à améliorer ces procédés connus de détermination de la position et de l'orientation du véhicule pour améliorer la précision de la position et de l'orientation du véhicule déterminées par un tel système.

Elle a donc pour objet un procédé de détermination de la position et de l'orientation d'un véhicule conforme à la revendication 1.

L'invention a également pour objet un support d'enregistrement d'informations, lisible par un microprocesseur, comportant des instructions pour la réalisation du procédé ci-dessus, lorsque ces instructions sont exécutées par un microprocesseur.

Enfin, l'invention a aussi pour objet un système de localisation mettant en oeuvre le procédé revendiqué.

L'invention sera mieux comprise à la lecture de la description qui va suivre, donnée uniquement à titre d'exemple non limitatif et faite en se référant aux dessins sur lesquels :

- la figure 1 est une illustration schématique d'un système de localisation d'un véhicule ;
- la figure 2 est une illustration schématique de différents modules logiciels mis en oeuvre dans le système de la figure 1;
- la figure 3 est un organigramme d'un procédé de détermination de la position et de l'orientation d'un véhicule à l'aide du système de la figure 1 ;
- les figures 4 et 5 sont des graphes illustrant l'évolution au cours du temps d'un écart utilisé pour corriger la position et l'orientation déterminées pour le véhicule.

Dans ces figures, les mêmes références sont utilisées pour désigner les mêmes éléments.

Dans la suite de cette description, les caractéristiques et fonctions bien connues de l'homme du métier ne sont pas décrites en détail. En particulier, pour les connaissances générales de l'homme du métier concernant les systèmes de localisation d'un véhicule à l'aide d'une unité de navigation inertielle, il est renvoyé, par exemple, à la thèse de Godha, S. (2006) : Performance évaluation of low cost MEMS-based IMU integrated with GPS for land vehicle navigation application. UCGE report, (20239).

Dans cette description, un exemple détaillé de mode de réalisation est d'abord décrit dans le chapitre I en référence aux figures. Ensuite, dans le chapitre II suivant, des variantes de ce mode de réalisation sont présentées. Enfin, les avantages des différents modes de réalisation sont présentés dans un chapitre III.

**Chapitre I : Exemple de mode de réalisation**

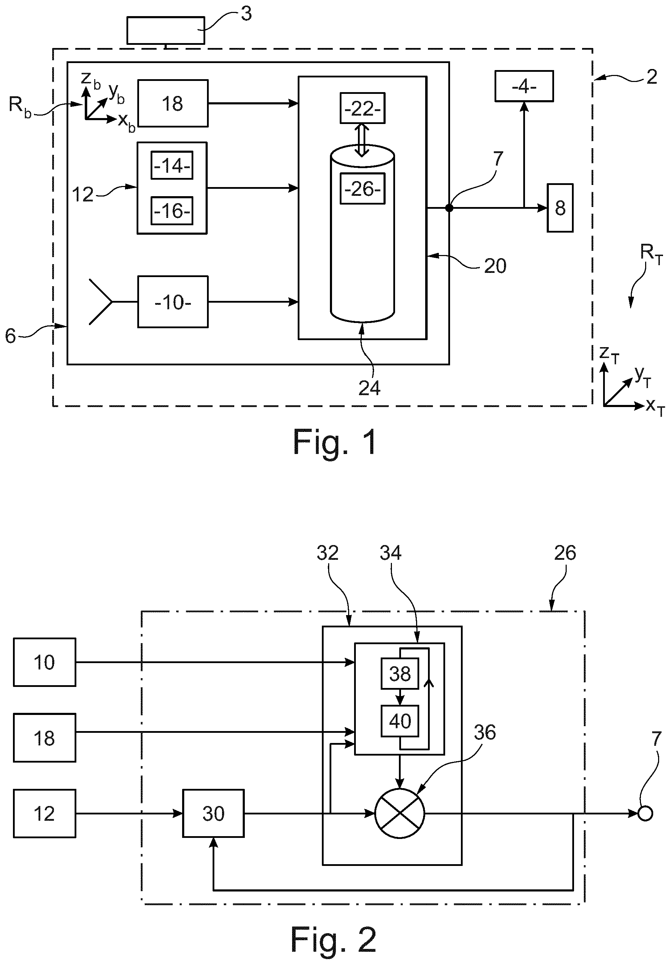

La figure 1 représente un véhicule automobile 2 capable de rouler sur un sol comme, par exemple, une route. A cet effet, il comporte typiquement des roues ou des chenilles. Ici, le véhicule 2 comporte une roue 3 qui roule sur le sol sur lequel le véhicule 2 se déplace. Dans cet exemple, la roue 3 est une roue du véhicule 2 qui ne peut pas être braquée. Par exemple, il s'agit d'une roue arrière du véhicule 2. Le véhicule 2 est aussi équipé de moyens 4 de propulsion tel qu'un moteur qui entraîne les roues ou les chenilles.

Le véhicule 2 est équipé d'un système 6 de localisation de ce véhicule. Ce système 6 est apte à déterminer la position, l'orientation et la vitesse du véhicule 2 dans un repère terrestre $R_T$. Ici, le repère terrestre $R_T$ est fixé sans aucun degré de liberté à la terre. Le repère $R_T$ comporte trois axes typiquement orthogonaux entre eux. Par exemple, ici, le repère $R_T$ est le repère connu sous le terme de repère ECEF ("Earth Centered, Earth fixed").

Un repère mobile $R_b$ est également fixé sans aucun degré de liberté au véhicule 2. Ce repère $R_b$ comporte trois axes orthogonaux entre eux notés respectivement $x_b$, $y_b$ et $z_b$. Classiquement, lorsque le véhicule 2 se déplace horizontalement, les axes $x_b$ et $y_b$ sont dans un plan horizontal et l'axe $z_b$ est vertical. Ici, l'axe $x_b$ est orienté et pointe dans la direction vers laquelle se déplace le véhicule lorsque celui-ci se déplace en marche avant.

Ici, la position du véhicule 2 dans le repère $R_T$ est exprimée par des coordonnées de l'origine du repère $R_b$ dans le repère $R_T$.

L'orientation du véhicule 2 est exprimée par l'angle $\psi$ de lacet (« yaw angle » en anglais), l'angle $\theta$ de tangage (« pitch angle » en anglais) et l'angle $\varphi$ de roulis (« roll angle » en anglais) du repère $R_b$ définis par rapport à un repère dit de "navigation". En pratique, le plus souvent, l'orientation du véhicule se présente sous la forme d'une matrice d'orientation à partir de laquelle il est possible de déduire l'angle de lacet, l'angle de tangage et l'angle de roulis du véhicule. L'orientation du véhicule peut aussi se présenter sous la forme d'un vecteur comportant directement l'angle de lacet, l'angle de tangage et l'angle de roulis du véhicule. Par la suite, on considère que ces deux cas de figures sont équivalents et donc que l'orientation du véhicule comporte l'angle de lacet, l'angle de tangage et l'angle de roulis du véhicule à partir du moment où ces trois angles peuvent être déduits directement d'une matrice ou d'un vecteur.

La position, l'orientation et la vitesse déterminées par le système 6 sont délivrées sur une sortie 7. Par la suite, la position, l'orientation et la vitesse délivrés sur la sortie 7 par le système 6 pour un instant tk sont notés, respectivement, P(k), O(k) et V(k).

Typiquement, le véhicule 2 comporte un poste 8 de pilotage pour guider ou assister au guidage du véhicule 2 vers une destination prédéfinie. Le poste 8 est raccordé à la sortie 7. Le poste 8 peut être un poste de pilotage manuel et/ou automatique. Dans le cas d'un poste de pilotage manuel, la position, l'orientation et la vitesse déterminées sont transmises à une interface homme-machine pour assister un être humain dans le pilotage des moyens 4 de propulsion. Dans le cas d'un poste de pilotage automatique, la position, l'orientation et la vitesse déterminées sont automatiquement converties en commandes de pilotage des moyens 4 de propulsion, puis transmises automatiquement à ces moyens 4 de propulsion.

Le système 6 comporte une unité 10 de géolocalisation par satellite, une unité 12 de mesure inertielle et un odomètre 18.

L'unité 10 est connue sous l'acronyme GNSS (« *Global Navigation Satellite System* ». A partir des signaux satellitaires qu'elle reçoit, l'unité 10 génère des signaux représentatifs de la position et de la vitesse du véhicule dans le repère $R_T$. L'unité 10 actualise ses mesures à une fréquence $F_{10}$. Classiquement, la fréquence $F_{10}$ est comprise entre 0,1 Hz et 20 Hz.

L'unité 12 est connue sous l'acronyme IMU (« *Inertial Measurement Unit* »). L'unité 12 comporte notamment un accéléromètre triaxe 14 et un gyromètre triaxe 16. Grâce à ces capteurs, l'unité 12 est capable de mesurer la variation de l'orientation, de la position et de la vitesse du véhicule 2. Ici, les axes de mesure de l'accéléromètre 14 et du gyromètre 16 sont confondus, respectivement, avec les axes $x_b$, $y_b$ et $z_b$ du repère $R_b$. De plus, l'accéléromètre 14 est agencé de manière à ce qu'une mesure positive de l'accélération du véhicule 2 le long de l'axe $x_b$ signifie que le véhicule 2 accélère en se déplaçant en marche avant.

L'unité 12 actualise les mesures de l'accélération et de la vitesse à une fréquence élevée $F_{12}$. Classiquement la fréquence $F_{12}$ est comprise entre 20 Hz et 2000 Hz. Par exemple, ici, la fréquence $F_{12}$ est égale à 200 Hz.

L'odomètre 18 mesure la vitesse angulaire de la roue 3 autour de son axe de rotation sur lequel elle est centrée. Pour cela, l'odomètre 18 mesure le déplacement angulaire de la roue 3 pendant un intervalle $[t_{ini}; t_{end}]$ connu. Ce déplacement angulaire est égal à l'écart entre la position angulaire de la roue 3 à l'instant $t_{ini}$ et la position angulaire de la roue 3 à l'instant courant $t_{end}$ de mesure. Ainsi, le ratio du déplacement angulaire mesuré à l'instant $t_{end}$ sur la durée de l'intervalle $[t_{ini}; t_{end}]$ fournit la vitesse angulaire de la roue 3 à l'instant $t_{end}$. La vitesse angulaire mesurée par cet odomètre 18 est donc une vitesse angulaire moyenne sur l'intervalle $[t_{ini}; t_{end}]$.

La durée de l'intervalle $[t_{ini}; t_{end}]$ est connue. Ici, la durée de l'intervalle $[t_{ini}; t_{end}]$ est constante et égale à une période $T_{18}$. Typiquement, l'instant $t_{ini}$ est le précédent instant de mesure de la vitesse angulaire de la roue 3. L'odomètre 18 actualise ses mesures à une fréquence $F_{18}$. La fréquence $F_{18}$ est plus petite que la fréquence $F_{12}$. Typiquement, la

fréquence $F_{18}$ est dix ou cinquante fois plus petite que la fréquence $F_{12}$. Classiquement, la fréquence $F_{18}$ est comprise entre 0,1 Hz et 20 Hz. Ici, la fréquence $F_{18}$ est égale à 1 Hz.

L'odomètre 18 se situe, par exemple, à proximité de la roue 3 dont il mesure la vitesse angulaire.

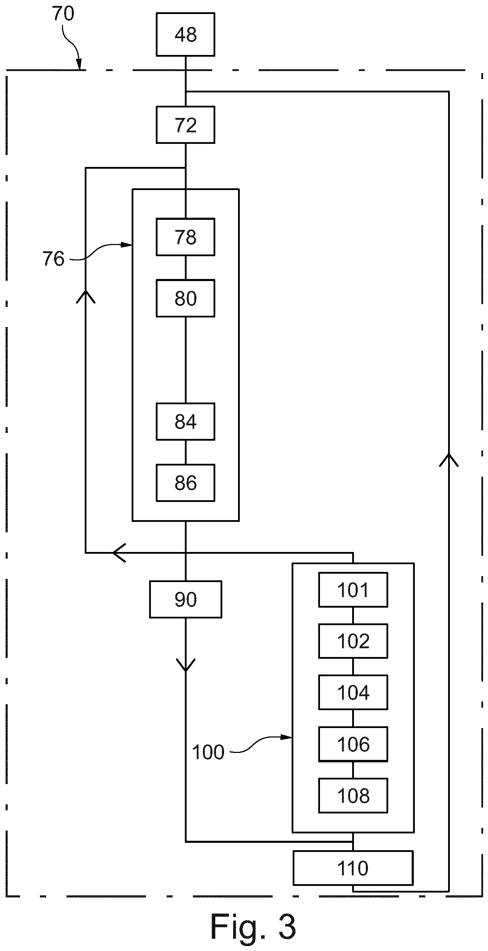

Pour déterminer la position, l'orientation et la vitesse du véhicule 2 à partir des mesures des unités 10 et 12 et de l'odomètre 18, le système 6 comporte un calculateur électronique programmable 20. Ce calculateur 20 est apte à acquérir les mesures des unités 10 et 12 et de l'odomètre 18. Ensuite, à partir de ces mesures, le calculateur 20 détermine la position, l'orientation et la vitesse du véhicule 2 dans le repère $R_T$. Le calculateur 20 comporte un microprocesseur 22 et une mémoire 24 comportant les instructions et les données nécessaires à la mise en oeuvre du procédé décrit en référence à la figure 3.

Plus précisément, la mémoire 24 comporte les instructions d'un module logiciel 26 apte à déterminer la position, l'orientation et la vitesse du véhicule 2 à partir des mesures acquises lorsqu'il est exécuté par le microprocesseur 22. Le module 26 implémente notamment un algorithme de fusion qui établit, à partir d'une précédente estimation de la position, de l'orientation et de la vitesse du véhicule 2 et de nouvelles mesures acquises depuis cette précédente estimation, une nouvelle estimation de la position, de l'orientation et de la vitesse du véhicule 2. Typiquement, l'algorithme de fusion établit également des marges d'erreur sur chaque nouvelle estimation.

Les principes généraux des algorithmes de fusion sont bien connus de l'homme du métier. Par exemple, le lecteur intéressé peut encore une fois se référer à la thèse Godha2006 précédemment citée. Typiquement, cet algorithme de fusion implémente un ou plusieurs filtres de Kalman. Ici, le module 26 implémente une architecture connue sous le terme de "en boucle fermée" ("closed loop integration scheme" ou "closed loop approach" en anglais).

La figure 2 représente plus en détail l'architecture du module 26. Le module 26 comporte un sous-module 30 d'intégration de mesure inertielle et un sous-module 32 de correction. Les principes généraux de fonctionnement de ces sous-modules 30 et 32 sont connus. Par exemple, pour une description détaillée de ces principes généraux, le lecteur peut consulter le chapitre 4 de la thèse Godha2006. Ainsi, par la suite, seuls les détails spécifiques à l'invention sont décrits en détail.

Le sous-module 30 est connu sous le terme anglais de "Mechanization". Pour chaque instant $t_k$, le sous-module 30 construit une estimation brute d'une position $P_e(k)$, d'une orientation $O_e(k)$ et d'un vitesse $V_e(k)$ du véhicule 2. Dans ce texte, le symbole "k" est le numéro d'ordre de l'instant $t_k$ dans la suite $\{0, t_1, t_2, ..., t_{k-1}, t_k, ...\}$ ordonnée temporellement des instants $t_k$. On note k-1 le numéro d'ordre de l'instant $t_{k-1}$ qui précède immédiatement l'instant $t_k$. Chaque position $P_e(k)$, orientation $O_e(k)$ et vitesse $V_e(k)$ du véhicule 2 est un vecteur comportant trois coordonnées. Les coordonnées de la position $P_e(k)$ dans le repère $R_T$ sont notées $x_e(k)$, $y_e(k)$ et $z_e(k)$. Les coordonnées de l'orientation $O_e(k)$ sont notées $\psi_e(k)$, $\theta_e(k)$ et $\varphi_e(k)$ et les coordonnées de la vitesse $V_e(k)$ sont notées $Vx_e(k)$, $Vy_e(k)$ et $Vz_e(k)$.

La fréquence des instants $t_k$ est inférieure ou égale à la fréquence $F_{12}$. Ici, la fréquence des instants $t_k$ est égale à la fréquence $F_{12}$.

Le sous-module 30 construit la position $P_e(k)$, l'orientation $O_e(k)$ et la vitesse $V_e(k)$ à partir :

- de la précédente position P(k-1), de la précédente orientation O(k-1) et de la précédente vitesse V(k-1) déterminées pour le véhicule 2 à l'instant $t_{k-1}$ par le système 6 et délivré sur la sortie 7, et
- des mesures de l'accéléromètre 14 et du gyromètre 16 acquises par le sous-module 30 à l'instant $t_k$.

La combinaison du sous-module 30 et de l'unité 12 forme ce qui est connu sous l'acronyme INS (« Inertial Navigation System »).

A certains instants $t_k$ particuliers, le sous-module 32 corrige la position $P_e(k)$, l'orientation $O_e(k)$ et la vitesse $V_e(k)$ construites par le sous-module 30 pour cet instant $t_k$ afin d'obtenir une position corrigée $P_e(k)$, une orientation corrigée $O_c(k)$ et une vitesse corrigée $V_c(k)$ pour cet instant $t_k$. Par la suite, ces instants $t_k$ particuliers sont appelés "instants $t_m$". Le symbole "m" est égal au numéro d'ordre de l'instant $t_k$ dans la suite $\{0, t_1, t_2, ..., t_{k-1}, t_k, ...\}$. Chaque numéro d'ordre m est donc égal à un numéro d'ordre k respectif. Ainsi, la position $P_e(m)$, l'orientation $O_e(m)$ et la vitesse $V_e(m)$ sont égales, respectivement, à la position $P_e(k)$, l'orientation $O_e(k)$ et la vitesse $V_e(k)$ construites pour l'instant $t_k$ égal à l'instant $t_m$. La suite $\{0, t_1, t_2, ..., t_{m-1}, t_m, ...\}$ des instants $t_m$ est un sous-ensemble de la suite $\{0, t_1, t_2, ..., t_{k-1}, t_k, ...\}$. Ainsi, la correction par le sous-module 32 n'est pas réalisée pour chaque instant $t_k$ mais seulement pour une partie d'entre eux. A chaque instant $t_m$, le sous-module 32 combine la position $P_e(m)$, l'orientation $O_e(m)$ et la vitesse $V_e(m)$ avec des coefficients de correction respectifs pour obtenir la position corrigée $P_c(m)$, l'orientation corrigée $O_c(m)$ et la vitesse corrigée $V_c(m)$. Aux instants $t_m$, c'est la position corrigée $P_c(m)$, l'orientation corrigée $O_c(m)$ et la vitesse corrigée $V_c(m)$ qui sont délivrés sur la sortie 7 et non pas la position $P_e(m)$, l'orientation $O_e(m)$ et la vitesse $V_e(m)$. Les coefficients de correction sont mis à jour en fonction des mesures de l'unité 10 et de l'odomètre 18. Les coefficients de corrections sont donc mis à jour à une fréquence inférieure à la fréquence $F_{12}$.

Le sous-module 32 acquière les mesures de l'unité 10 à une fréquence inférieure ou égale à la fréquence $F_{12}$. Ici, la fréquence d'acquisition des mesures de l'unité 10 est égale à la fréquence $F_{10}$. Par la suite, on note $tg_i$ les instants d'acquisition d'une nouvelle mesure de l'unité 10. Ces instants $tg_i$ forment une suite $\{0, tg_1, tg_2, ..., tg_{i-1}, tg_i, ...\}$ ordonnée

temporellement d'instants $tg_i$. Le symbole "i" désigne le numéro d'ordre de l'instant $tg_i$ dans cette suite. Le sous-module 32 met à jour les coefficients de correction à chaque fois qu'une nouvelle mesure de l'unité 10 est acquise et donc pour chaque instant $tg_i$. Les instants $tg_i$ sont moins fréquents que les instants $t_k$.

Le sous-module 32 acquière aussi les mesures de l'odomètre 18 à une fréquence inférieure ou égale à la fréquence $F_{12}$. Ici, la fréquence d'acquisition des mesures de l'odomètre 18 est égale à la fréquence $F_{18}$. Par la suite, on note $to_j$ les instants d'acquisition d'une nouvelle mesure de l'odomètre 18. Le symbole "j" est le numéro d'ordre de l'instant $to_j$ dans la suite $\{0, to_1, to_2, ..., to_{j-1}, to_j, ...\}$ ordonnée temporellement des instants $to_j$. Le sous-module 32 met aussi à jour les coefficients de correction à chaque fois qu'une nouvelle mesure de l'odomètre 18 est acquise et donc pour chaque instant $to_j$. Puisque la fréquence $F_{18}$ est inférieure à la fréquence $F_{12}$, il existe systématiquement plusieurs instants $t_k$ entre les instants $to_{j-1}$ et $to_j$.

Par la suite, on considère que les suites $\{0, tg_1, tg_2, ..., tg_{i-1}, tg_i, ...\}$ et $\{0, to_1, to_2, ..., to_{j-1}, to_j, ...\}$ sont toutes les deux des sous-ensembles de la suite $\{0, t_1, t_2, ..., t_{k-1}, t_k, ...\}$. Ainsi, chaque instants $tg_i$ et $to_j$ correspond à un instant $t_k$ respectif de la suite $\{0, t_1, t_2, ..., t_{k-1}, t_k, ...\}$. De plus, dans ce mode de réalisation, les instants $tg_i$ et $to_j$ sont distincts. Autrement dit, à un instant $tg_i$ où la mesure de l'unité 10 est acquise, aucune mesure de l'odomètre 18 n'est acquise et vice-versa. Enfin, dans ce texte, les instants $t_m$ sont égaux aux instants auxquels le sous-module 32 acquière soit une mesure de l'unité 10 soit une mesure de l'odomètre 18.

Pour mettre à jour les coefficients de corrections en fonction des mesures de l'unité 10 et de l'odomètre 18, le sous-module 32 comporte un filtre de Kalman 34. Pour combiner les coefficients de corrections aux estimations brutes délivrées par le sous-module 30, le sous-module 32 comporte aussi un additionneur 36.

Ici, le filtre 34 est connu sous l'acronyme ESKF (Error State Kalman Filter) car il estime des corrections à apporter à la position, l'orientation et la vitesse estimées par le sous-module 30. Plus précisément, le filtre 34 fournit, pour chaque instant $t_m$, un vecteur d'état $X_{m|m}$. Le vecteur d'état $X_{m|m}$ contient notamment les coefficients de correction à utiliser pour corriger la position $P_e(m)$, de l'orientation $O_e(m)$, de la vitesse $V_e(m)$. Pour chaque instant $t_m$, l'additionneur 36 combine les coefficients de correction fournis par le filtre 34 avec la position $P_e(m)$, l'orientation $O_e(m)$ et la vitesse $V_e(m)$ pour obtenir la position corrigée $P_c(m)$, l'orientation corrigée $O_c(m)$ et la vitesse corrigée $V_c(m)$. Pour chaque instant $t_k$ postérieur à l'instant $t_m$ et antérieur à l'instant $t_{m+1}$, aucune correction n'est apportée aux estimations construites par le sous-module 30.

Par exemple, ici, le vecteur d'état $X_{m|m}$ contient des coefficients de correction $\delta_x(m)$, $\delta_y(m)$ et $\delta_z(m)$ des coordonnées, respectivement, $x_e(m)$, $y_e(m)$ et $z_e(m)$ de la position $P_e(m)$. L'additionneur 36 ajoute ces coefficients $\delta_x(m)$, $\delta_y(m)$ et $\delta_z(m)$, respectivement, aux coordonnées $x_e(m)$, $y_e(m)$ et $z_e(m)$ pour obtenir les coordonnées, respectivement, $x_c(m)$, $y_c(m)$ et $z_c(m)$ de la position corrigée $P_c(m)$.

Le vecteur d'état $X_{m|m}$ comporte aussi des coefficients de correction $\delta_\psi(m)$, $\delta_\theta(m)$ et $\delta_\varphi(m)$, respectivement, des coordonnées $\psi_e(m)$, $\theta_e(m)$ et $\varphi_e(m)$ de l'orientation $O_e(m)$. L'additionneur 36 ajoute ces coefficients $\delta_\psi(m)$, $\delta_\theta(m)$ et $\delta_p(m)$, respectivement, aux coordonnées $\psi_e(m)$, $\theta_e(m)$ et $\varphi_e(m)$ pour obtenir les coordonnées corrigées, respectivement, $\psi_c(m)$, $\theta_c(m)$ et $\varphi_c(m)$ de l'orientation $O_c(m)$.

De façon similaire, le vecteur d'état $X_{m|m}$ comporte aussi trois coefficients de correction $\delta v_x(m)$, $\delta v_y(m)$ et $\delta v_z(m)$ utilisés pour corriger, respectivement, les coordonnées $Vx_e(m)$, $Vy_e(m)$ et $Vz_e(m)$ de la vitesse $V_e(m)$.

Classiquement, le vecteur d'état $X_{m|m}$ comporte aussi des coefficients de correction pour corriger d'autres paramètres comme des biais de mesure de l'accéléromètre 14 et du gyromètre 16 ou autres. Dans ce mode de réalisation, le vecteur d'état $X_{m|m}$ contient en plus :

- trois coefficients de correction $\delta ba_x(m)$, $\delta ba_y(m)$ et $\delta ba_z(m)$ pour corriger les biais de mesure de l'accéléromètre 14 dans les directions, respectivement, $x_b$, $y_b$ et $z_b$,
- trois coefficients de correction $\delta bg_z(m)$, $\delta bg_y(m)$ et $\delta bg_z(m)$ pour corriger les biais de mesure du gyromètre 16 autour des axes parallèles, respectivement, aux directions $x_b$, $y_b$ et $z_b$,
- un coefficient de correction $\delta_{Sr}(m)$ d'un facteur d'échelle $S_r$.

Le facteur d'échelle $S_r$ permet de convertir la vitesse angulaire de la roue 3 mesurée par l'odomètre 18 en une vitesse de déplacement linéaire de cette roue. La vitesse de déplacement linéaire de la roue 3 correspond à la vitesse linéaire du point de contact entre la roue 3 et le sol sur lequel elle roule. Ce facteur d'échelle $S_r$ dépend notamment du rayon de la roue 3. En première approximation, ce facteur d'échelle $S_r$ est une constante. Or, le rayon de la roue 3 peut varier dans le temps. Par exemple, la roue 3 est équipée d'un pneumatique de sorte que son rayon varie en fonction de la pression du pneumatique. Le coefficient $\delta_{Sr}(m)$ permet de corriger ces variations du facteur d'échelle $S_r$.

Dans ce mode de réalisation, le vecteur d'état $X_{m|m}$ est donc le vecteur suivant à seize coordonnées : $[\delta_\psi(m), \delta_\theta(m), \delta_\phi(m), \delta v_x(m), \delta v_y(m), \delta v_z(m), \delta_x(m), \delta_y(m), \delta_z(m), \delta ba_x(m), \delta ba_y(m), \delta ba_z(m), \delta bg_x(m), \delta bg_y(m), \delta bg_z(m), \delta_{Sr}(m)]^T$, où le symbole "$T$" est le symbole de l'opération transposée.

Le filtre 34 est un algorithme récursif qui, pour chaque instant $t_m$, fournit à l'additionneur 36 un nouveau vecteur d'état $X_{m|m}$ calculé à partir :

- du précédent vecteur d'état $X_{m-1|m-1}$,
- de la mesure de l'unité 10 ou de l'odomètre 18 acquise à l'instant $t_m$, et
- de la position $P_e(m)$, de l'orientation $O_e(m)$ et de la vitesse $V_e(m)$ construites par le sous-module 30 pour l'instant $t_m$.

Classiquement, le filtre 34 comporte un bloc 38 de prédiction calculant un premier vecteur d'état $X_{m|m-1}$ à partir du vecteur $X_{m-1|m-1}$ suivi d'un bloc 40 de mise à jour calculant le vecteur $X_{m|m}$ à partir du vecteur $X_{m|m-1}$ prédit. Ces blocs sont exécutés l'un après l'autre pour chaque vecteur $X_{m|m}$.

Plus précisément, le bloc 38 construit une prédiction $X_{m|m-1}$ du vecteur d'état à partir du précédent vecteur d'état $X_{m-1|m-1}$.

Ici, un exemple de mode de réalisation des blocs 38 et 40 est décrit dans le cas particulier où le filtre 34 est un filtre de Kalman étendue connue sous l'acronyme EKF ("Extended Kalman Filter").

L'équation de propagation ou de prédiction de l'état du filtre 34 mise en oeuvre par le bloc 38 est définie par la relation (1) suivante :

$$X_{m|m-1} = A_{m-1}X_{m-1|m-1}$$

où :

- $X_{m-1|m-1}$ est l'estimation du vecteur d'état à l'instant $t_{m-1}$ obtenue en prenant en compte toutes les mesures jusqu'à l'instant $t_{m-1}$,
- $X_{m|m-1}$ est la prédiction du vecteur d'état à l'instant $t_m$ obtenue en prenant en compte toutes les mesures jusqu'à l'instant $t_{m-1}$ et sans prendre en compte les mesures acquises à l'instant $t_m$,
- $A_{m-1}$ est la matrice de transition d'états à l'instant $t_{m-1}$.

Dans le cas particulier décrit ici où le filtre 34 est un "Error State Kalman Filter", le vecteur $X_{m-1|m-1}$ est toujours nul car on suppose que l'erreur avait été corrigée précédemment. Autrement dit, la relation (1) est ramenée à la relation suivante : $X_{m|m-1} = 0$.

L'équation de propagation ou de prédiction de la matrice de covariance de l'erreur mise en oeuvre par le bloc 38 est définie par la relation (2) suivante :

$$P_{m|m-1} = A_{m-1}P_{m-1|m-1}A_{m-1}^{\top} + Q_{m-1}$$

où :

- $P_{m-1|m-1}$ est l'estimation de la matrice de covariance de l'erreur à l'instant $t_{m-1}$ obtenue en prenant en compte toutes les mesures acquises jusqu'à l'instant $t_{m-1}$,
- $P_{m|m-1}$ est la prédiction de la matrice de covariance $P_m$ à l'instant $t_m$ obtenue en prenant seulement en compte les mesures acquises jusqu'à l'instant $t_{m-1}$,
- $Q_{m-1}$ est la matrice de covariance du bruit de processus v.

Le bloc 40 corrige la prédiction $X_{m|m-1}$ du vecteur d'état de manière à obtenir le vecteur d'état $X_{m|m}$. Le vecteur $X_{m|m}$ corrigé est construit en fonction d'un écart $Y_m$ entre :

- une estimation $z_m$ d'une grandeur physique à l'instant $t_m$, et
- la mesure $z_m$ de cette même grandeur physique à l'instant $t_m$.

L'écart $Y_m$ est connu sous le nom de "innovation". Ici, les grandeurs physiques mesurées sont la position et la vitesse mesurées par l'unité 10 et, en alternance, la vitesse $V_r$ de la roue 3 obtenue à partir de la vitesse angulaire mesurée par l'odomètre 18. Ainsi, pour chaque instant $tg_i$, le bloc 40 corrige la prédiction $X_{m|m-1}$ uniquement à partir de la mesure de l'unité 10 acquise à cet instant $tg_i$. Réciproquement, pour chaque instant $to_j$, le bloc 40 corrige la prédiction $X_{m|m-1}$ uniquement à partir de la mesure de l'odomètre 18 acquise à cet instant $to_j$. La correction de la prédiction $X_{m|m-1}$, aux instants $tg_i$, en fonction des écarts de position et de vitesse est réalisée de façon conventionnelle. Ainsi, cette fonctionnalité du bloc 40 n'est pas décrite plus en détail. Seule la correction de la prédiction $X_{m|m-1}$, aux instants $to_j$, en fonction de la mesure de l'odomètre 18 est décrite ci-dessous.

Dans cet exemple de réalisation, la grandeur physique est la vitesse $V_r$ de la roue 3 dans la direction $x_b$ du repère $R_b$. La mesure de cette vitesse $V_r$ à l'instant $t_m$ est construite à l'aide de la relation (3) suivante :

$$V_r(m) = (S_r + \delta_{Sr}(m-1)) \times w_r(m)$$

où :

- m est le numéro d'ordre de l'instant $to_j$,
- $V_r(m)$ est la vitesse mesurée $V_r$ à l'instant $t_m$,
- $S_r$ est le facteur d'échelle constant,
- $\delta_{Sr}(m-1)$ est le coefficient de correction du facteur d'échelle $S_r$ mis à jour au précédent instant $t_{m-1}$,
- $w_r(m)$ est la vitesse angulaire mesurée par l'odomètre 18 acquise à l'instant $t_m$,
- le symbole "x" est le symbole de la multiplication scalaire.

La vitesse $V_r(m)$ est une vitesse moyenne sur l'intervalle $[to_{j-1}, to_j]$ car la vitesse angulaire $w_r(m)$ mesurée est une vitesse angulaire moyenne de la roue 3 sur ce même intervalle.

L'estimation $\hat{z}_m$ de la vitesse $V_r(m)$ est construite à l'aide de la relation (4) suivante :

$$\hat{z}_m = \frac{1}{N+1} \sum_{l=k-N}^{k} f_{odo}(P(l), O(l), V(l))$$

où :

- k est le numéro d'ordre de l'instant $t_k$ égale à l'instant $t_m$ dans la suite $\{0, t_1, t_2, ..., t_{k-1}, t_k, ...\}$,
- N est égal au nombre d'instants $t_k$ compris dans l'intervalle $[to_{j-1}; to_j[$,
- $f_{odo}(...)$ est une fonction d'observation qui retourne une estimation $V_{odo}(k)$ de la vitesse instantanée de la roue 3 à un instant $t_k$ en fonction des estimations $P(k)$, $O(k)$ et $V(k)$ délivré sur la sortie 7 pour cet instant $t_k$.

Ici, l'estimation $\hat{z}_m$ est donc égale à la moyenne algébrique des estimations $V_{odo}(k)$ des vitesses instantanées de la roue 3 à chacun des instants $t_k$ compris dans l'intervalle $[to_{j-1}; to_j]$,

Dans ce mode de réalisation, la fonction $f_{odo}$ est par exemple définie par la relation (5) suivante :

$$V_{odo}(k) = f_{odo}(P(k), O(k), V(k)) = u_x\left(C^e_b(k)V(k) - w^b_{eb} \wedge l^b_{ob}\right)$$

où :

- $u_x$ est un vecteur de projection de la vitesse sur l'axe $x_b$, égal à [1 0 0],
- $C^e_b(k)$ est une matrice de rotation 3x3 définissant l'orientation du repère $R_b$ par rapport au repère $R_T$. Cette matrice est calculée pour chaque instant $t_k$ à partir de l'orientation $O_c(k)$,
- $V(k)$ est un vecteur de trois coordonnées définissant la vitesse de l'unité 12 à l'instant $t_k$ par rapport au repère $R_T$ et exprimée dans le repère $R_T$,
- $w^b_{eb}$ est un vecteur de trois coordonnées définissant la vitesse angulaire de l'unité 12 à l'instant $t_k$ par rapport au repère $R_T$ et exprimée dans le repère $R_b$,
- $l^b_{ob}$ est le vecteur de trois coordonnées définissant le bras de levier entre le point de contact de la roue 3 avec le sol et l'unité 12, exprimé dans le repère $R_b$, et
- le symbole "$\wedge$" désigne l'opération produit vectoriel.

La position du point de contact, entre la roue 3 et le sol sur lequel elle roule, par rapport à l'unité 12 est codée dans le vecteur $l^b_{ob}$ à trois coordonnées exprimées dans le repère $R_b$. Ce vecteur $l^b_{ob}$ s'étend depuis un point situé à l'emplacement de l'unité 12 jusqu'à un point situé à l'emplacement du point de contact entre la roue 3 et le sol. La norme du vecteur $l^b_{ob}$ est donc égale à la distance qui sépare l'unité 12 de ce point de contact. Ce vecteur $l^b_{ob}$ est connu sous le terme de "bras de levier". En première approximation, ce vecteur $l^b_{ob}$ est considéré comme constant et connu.

L'innovation $Y_m$ est obtenue à l'aide de la relation (6) suivante :

$$Y_m = V_r(m) - \hat{z}_m.$$

Typiquement, le bloc 40 corrige la prédiction $X_{m|m-1}$ en y ajoutant l'innovation $Y_m$ multipliée par le gain $K_m$ de Kalman. Le gain $K_m$ est calculé à l'aide de la relation (7) suivante :

$$K_m = P_{m|m-1}H_m^\top (H_mP_{m|m-1}H_m^\top + R_m)^{-1}$$

où :

- la matrice $R_m$ est la matrice de covariance du bruit sur les mesures de l'odomètre 18, et
- $H_m$ est une matrice d'observation.

La matrice d'observation $H_m$ est fonction de la dérivée partielle de la relation (4) par rapport aux différents paramètres du vecteur d'état $X_{m|m}$. Le calcul de cette matrice $H_m$ est décrit en détail en référence à la figure 3.

Ensuite, le vecteur d'état $X_{m|m}$ est obtenu à l'aide de la relation (8) Suivante : $X_{m|m} = X_{m|m-1} + K_mY_m$.

La matrice mise à jour de covariance de l'erreur à l'instant $t_m$ est calculée à l'aide de la relation (9) suivante :

$$P_{m|m} = (I - K_mH_m)P_{m|m-1}$$

où I est la matrice identité.

La matrice $P_{m|m}$ contient les marges d'erreur sur les estimations des coefficients de corrections.

Dans ce mode de réalisation particulier, l'additionneur 36 est un simple additionneur qui ajoute à la position $P_e(k)$, à l'orientation $O_e(k)$ et à la vitesse $V_e(k)$ les coefficients de corrections correspondant contenu dans le vecteur d'état $X_{m|m}$. Ensuite, l'additionneur 36 délivre sur la sortie 7 la position $P_e(k)$, l'orientation $O_c(k)$ et la vitesse $V_c(k)$ corrigées ainsi obtenues.

Le fonctionnement du système 6 va maintenant être décrit en référence au procédé de la figure 3.

Le procédé débute par une phase 48 d'initialisation du système 6. Cette phase 48 débute immédiatement après l'activation du système 6, c'est-à-dire typiquement juste après qu'il ait été mis sous tension. Lors de cette phase 48 les différentes variables et paramètres nécessaires à l'exécution du module 26 sont initialisées. Par exemple, les valeurs initiales de la position, de la vitesse et de l'orientation du véhicule 2, du facteur d'échelle $S_r$, et des coefficients de correction sont initialisées. Il existe de nombreux algorithmes qui permettent d'obtenir rapidement ces valeurs initiales. De tels algorithmes sont par exemple décrits dans le chapitre 14 du livre suivant : P. Groves : « Principles of GNSS, Inertial and multisensor integrated navigation systems 2nd édition », Artech House, 2013. Par la suite, ce livre est désigné par l'expression "Groves2013".

Une fois la phase 48 d'initialisation terminée, une phase 70 d'exécution du module 26 débute.

La phase 70 débute par une étape 72 d'initialisation de différentes variables d'accumulation. Dans cet exemple, les variables d'accumulation sont au nombre de trois et sont notées $V_{moy}$, $H_{moy}$ et $N_{moy}$. Les variables $V_{moy}$ et $N_{moy}$ sont des variables scalaires. La variable $H_{moy}$ est une matrice d'une ligne et de seize colonnes. Lors de l'étape 72, les variables $V_{moy}$ et $N_{moy}$ sont initialisées à zéro et tous les coefficients de la matrice $H_{moy}$ sont également initialisés à zéro.

Ensuite, lors d'une étape 76, à chaque fois que des nouvelles mesures de l'unité 12 sont acquises par le calculateur 20, le module 26 actualise la position, l'orientation et la vitesse du véhicule 2. Ainsi, cette actualisation est réalisée pour chaque instant $t_k$.

Plus précisément, l'étape 76 comporte une opération 78 lors de laquelle l'accéléromètre 14 et le gyromètre 16 mesurent, respectivement, l'accélération et la vitesse angulaire du véhicule 2 et ces nouvelles mesures sont acquises par le calculateur 20 à l'instant $t_k$.

Ensuite, lors d'une opération 80, le sous-module 30 construit les estimations brutes $P_e(k)$, $O_e(k)$ et $V_e(k)$ à partir :

- de la précédente position P(k-1), de la précédente orientation O(k-1) et de la précédente vitesse V(k-1), et
- des mesures de l'accéléromètre 14 et du gyromètre 16 acquises à l'instant $t_k$.

Ensuite, lors d'une opération 84, le sous-module 30 construit aussi l'estimation $V_{odo}(k)$ de la vitesse instantanée de la roue 3 à l'instant $t_k$ uniquement à partir de la position P(k), de l'orientation O(k) et de la vitesse V(k) obtenues à l'issue de l'opération 80. Pour cela, le sous-module 30 utilise la relation (5) précédemment décrite.

Lors de l'opération 84, le sous-module 30 construit également une matrice d'observation $H_{odo}(k)$ de la vitesse instantanée de la roue 3. La matrice $H_{odo}(k)$ est une matrice qui permet de construire la matrice d'observation $H_m$ utilisée pour calculer le gain $K_m$. Cette matrice $H_{odo}(k)$ a les mêmes dimensions que la matrice $H_m$. Ainsi, ici, il s'agit d'une ligne comportant seize coefficients. Par la suite, ces coefficients sont numérotés de 1 à 16 en allant de la gauche vers la droite et noté respectivement $H_{odo}(k)_p$, où l'indice p est le numéro d'ordre du coefficient dans cette ligne. Ici, la matrice

$H_{odo}(k)$ est la dérivée, à l'instant $t_k$, de la fonction d'observation $f_{odo}(P(k), O(k), V(k))$ par rapport à chacune des variables d'état du vecteur d'état.

Dans ce mode de réalisation particulier, les coefficients de la matrice $H_{odo}(k)$ sont calculés comme suit.

Les coefficients 1 à 3 de la matrice $H_{odo}(k)$ sont calculés à l'aide de la relation (10) suivante :

$$\left[ H_{odo}(k)_1, H_{odo}(k)_1, H_{odo}(k)_3 \right]^T = \left[ 1\ 0\ 0 \right] C_b^{e\ T} \left[ V(k)\wedge \right]$$

où la matrice $[V(k)\wedge]$ est définie par la relation (11) suivante :

$$\left[ V(k)\wedge \right] = \begin{bmatrix} 0 & -Vz(k) & Vy(k) \\ Vz(k) & 0 & -Vx(k) \\ -Vy(k) & Vx(k) & 0 \end{bmatrix}$$

où $Vx(k)$, $Vy(k)$ et $Vz(k)$ sont les coordonnées de la vitesse $V(k)$.

Les coefficients 4 à 6 de la matrice $H_{odo}(k)$ sont calculés à l'aide de la relation (12) suivante :

$$\left[ H_{odo}(k)_4, H_{odo}(k)_5, H_{odo}(k)_6 \right]^T = \left[ 1\ 0\ 0 \right] C_b^{e\ T}$$

Les coefficient 7 à 15 de la matrice $H_{odo}(k)$ sont nuls.

Le coefficient 16 de la matrice $H_{odo}(k)$ est calculé à l'aide de la relation (13) suivante :

$$H_{odo}(k)_{16} = V_{odo}(k)$$

Lors d'une opération 86, le sous-module 30 accumule les valeurs calculées lors de l'opération 84 dans les variables $V_{moy}$, $H_{moy}$ et $N_{moy}$. Pour cela, le sous-module 30 met en oeuvre les relations suivantes :

$$\text{relation (14) : } V_{moy} = V_{moy} + V_{odo}(k),$$

$$\text{relation (15) : } H_{moy} = H_{moy} + H_{odo}(k),$$

$$\text{relation (16) : } N_{moy} = N_{moy} + 1.$$

Dans les relations ci-dessus, les variables $V_{moy}$, $H_{moy}$ et $N_{moy}$ à droite du signe "=" correspondent aux valeurs de ces variables avant que les relations ci-dessus aient été mises en oeuvre. La relation (15) correspond à une addition de matrice.

Ensuite, seulement si l'instant $t_k$ est en plus un instant $tg_i$ où une mesure de l'unité 10 est acquise, le calculateur 20 exécute une étape 90 de mise à jour des coefficients de correction en fonction de la nouvelle mesure de l'unité 10. Cette opération est réalisée de façon conventionnelle et n'est donc pas décrite. Lors de cette étape 90 la mise à jour des coefficients de correction est réalisée sans utiliser la mesure de l'odomètre 18.

Seulement si l'instant $t_k$ est en plus un instant $to_j$ où une mesure de l'odomètre 18 est acquise, après l'étape 76, le calculateur 20 exécute une étape 100 de mise à jour des coefficients de correction en fonction de la nouvelle mesure de l'odomètre 18. Lors de cette étape 100 la mise à jour des coefficients de correction est réalisée sans utiliser la mesure de l'unité 10.

Si l'instant $t_k$ ne correspond ni à un instant $tg_i$ ni à un instant $to_j$, alors la position $P_e(k)$, l'orientation $O_e(k)$ et à la vitesse $V_e(k)$ estimées par le sous-module 30 et non corrigé par le sous-module 32 sont délivrés sur la sortie 7. Ainsi

aux instants $t_k$ situés entre les instants $t_m$, c'est la la position $P_e(k)$, l'orientation $O_e(k)$ et la vitesse $V_e(l)$ qui sont délivrés sur la sortie 7. De plus, le procédé retourne à l'étape 76 sans exécuter ni l'étape 90 ni l'étape 100. Dans ce cas, la précédente position, la précédente orientation et de la précédente vitesse utilisées lors de la prochaine itération de l'étape 76 sont égales, respectivement, à la position $P_e(k)$, l'orientation $O_e(k)$ et à la vitesse $V_e(k)$.

Lors de l'étape 100, le sous-module 32 commence par acquérir, lors d'une opération 101, une nouvelle mesure de l'odomètre 18.

Ensuite, lors d'une opération 102, le bloc 38 est exécuté par le calculateur 20 pour obtenir le vecteur d'état prédit $X_{m|m-1}$ à partir de la précédente estimation $X_{m-1|m-1}$ de ce vecteur d'état. La précédente estimation $X_{m-1|m-1}$ est celle obtenue au précédent instant $t_{m-1}$. Le précédent instant $t_{m-1}$ correspond soit à un instant $tg_i$ soit à l'instant $to_{j-1}$. Dès lors la précédente estimation $X_{m-1|m-1}$ est celle qui a été construite soit lors de la précédente exécution de l'étape 90 soit lors de la précédente exécution de l'étape 100. La prédiction $X_{m|m-1}$ du vecteur d'état est construite en mettant en oeuvre la relation (1). Dans ce cas particulier où le filtre 34 est un "error-state Kalman filter", la prédiction $X_{m|m-1}$ est systématiquement nulle.

Lors de l'étape 102, bloc 38 construit aussi la prédiction $P_{m|m-1}$ de la matrice de covariance $P_m$ à l'instant $t_m$ en mettant en oeuvre la relation (2).

Ensuite, le bloc 40 est exécuté pour corriger la prédiction $X_{m|m-1}$ obtenue à l'issue de l'opération 102. Pour cela, lors d'une opération 104, le bloc 40 construit la mesure $V_r(m)$ de la vitesse $V_r$ de la roue 3 à partir de la vitesse angulaire $w_r(m)$ mesurée par l'odomètre 18. Pour cela, le bloc 40 utilise la relation (3).

Lors d'une opération 106, le bloc 40 construit l'estimation $\hat{z}_m$ de la vitesse $V_r(m)$ à partir des mesures de l'unité 12. Pour cela, dans ce mode de réalisation, le bloc 40 calcule la moyenne arithmétique des estimations $V_{odo}(k)$ construites, par le sous-module 30, pour chaque instant $t_k$ compris dans l'intervalle $[to_{j-1}, to_j]$. Ici, l'estimation $\hat{z}_m$ est obtenue en mettant en oeuvre la relation (17) suivante :

$$\hat{z}_m = V_{moy}/N_{moy}.$$

Dans ce mode de réalisation, lors de l'opération 106, le bloc 40 calcule aussi la matrice d'observation $H_m$. La matrice $H_m$ est égale à la moyenne arithmétique des matrices $H_{odo}(k)$ construites, par le sous-module 30, pour chacun des instants $t_k$ compris dans l'intervalle $[to_{j-1}, to_j]$. Ici, la matrice $H_m$ est calculée à l'aide de la relation (18) suivante :

$$H_m = H_{moy}/N_{moy}.$$

Lors de l'opération suivante 108, le bloc 40 met à jour les coefficients de correction. Pour cela, il corrige la prédiction $X_{m|m-1}$ en fonction de l'écart $Y_m$ entre la mesure $V_r(m)$ et son estimation $\hat{z}_m$. A cet effet, le bloc 40 calcule l'écart $Y_m$ selon la relation (6). Ensuite, le gain $K_m$ est calculé à l'aide de la relation (7). Ainsi, dans ce mode de réalisation, le gain $K_m$ est calculé en utilisant une moyenne arithmétique des matrices $H_{odo}(k)$. Le vecteur d'état corrigé $X_{m|m}$ est alors obtenu en mettant en oeuvre la relation (8).

Lors de l'opération 108, le bloc 40 obtient également la matrice $P_{m|m}$ de covariance mise à jour à l'aide de la relation (9).

A l'issue des étapes 90 et 100, lors d'une étape 110, le sous-module 32 corrige la position $P_e(m)$, l'orientation $O_e(m)$ et la vitesse $V_e(m)$ pour obtenir la position corrigée $P_c(m)$, l'orientation corrigée $O_c(m)$ et la vitesse corrigée $V_c(m)$.

Pour cela, l'additionneur 36 ajoute les coefficients de correction contenus dans le vecteur $X_{m|m}$ aux coordonnées correspondantes de la position $P_e(m)$, de l'orientation $O_e(m)$ et de la vitesse $V_e(m)$, construite lors de l'exécution de l'opération 80, pour obtenir la position $P_c(m)$, l'orientation $O_c(m)$ et la vitesse $V_c(m)$. Ainsi, uniquement aux instants $t_m$, ce sont la position $P_c(m)$, l'orientation $O_c(m)$ et la vitesse $V_c(m)$ qui sont délivrés sur la sortie 7 et non pas la position $P_e(m)$, l'orientation $O_e(m)$ et la vitesse $V_e(m)$. De plus, lors de l'étape 110, la position $P(k)$, l'orientation $O(k)$ et la vitesse $V(k)$ sont transmises au sous-module 30 et utilisées par le sous-module 30 comme précédente position, précédente orientation et précédente vitesse du véhicule 2 lors de la prochaine itération de l'étape 76.

Après l'étape 110, le procédé retourne à l'étape 72.

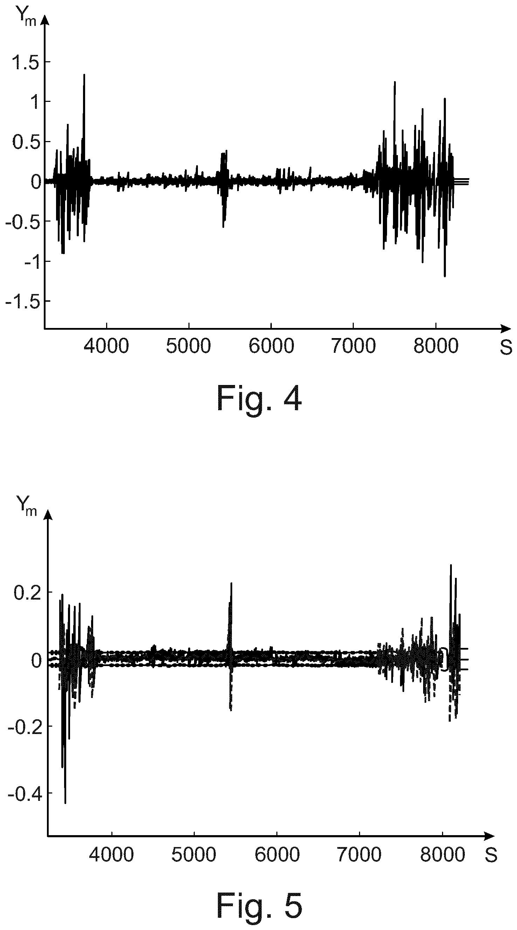

Le graphe de la figure 4 représente l'évolution de l'innovation $Y_m$ au cours du temps dans un système de localisation identique au système 6 sauf que l'estimation $\hat{z}_m$ de la vitesse $V_r(m)$ est prise égale à $V_{odo}(m)$ et non pas construite à l'aide de la relation (4). Le fait de prendre l'estimation $\hat{z}_m$ de la vitesse $V_r(m)$ égale à $V_{odo}(m)$ correspond à ce qui est fait dans l'état de l'art. C'est par exemple ce qui est enseigné dans le chapitre 16 du livre Groves2013. Autrement dit, dans l'état de l'art, la vitesse angulaire mesurée par l'odomètre 18 est traitée comme s'il s'agissait d'une vitesse angulaire instantanée de la roue 3 à l'instant $to_j$.

Le graphe de la figure 5 représente l'évolution de l'innovation $Y_m$ au cours du temps dans le système 6 pour les mêmes déplacements du véhicule 2 que ceux pris en compte pour établir le graphe de la figure 4. Le graphe de la figure 5 montre que dans les mêmes conditions de fonctionnement, l'innovation $Y_m$ calculée par le système 6 est significativement plus petite que celle illustrée sur le graphe de la figure 4. Le fait que l'innovation $Y_m$ soit plus petite permet d'améliorer la précision de la position et de l'orientation délivrées par le système de localisation. Autrement dit, en tenant compte du fait que la vitesse angulaire mesurée par l'odomètre 18 est une vitesse angulaire moyenne sur l'intervalle $[to_{j-1}, to_j]$ et non pas une vitesse angulaire instantanée, la précision du système de localisation est améliorée.

Chapitre II : Variantes

Variantes du filtre de Kalman :

De nombreux autres modes de réalisation du filtre 34 sont possibles. Par exemple, le filtre 34 peut être un filtre de Kalman linéaire, un filtre de Kalman étendu ou EKF (« Extended Kalman Filter »), un filtre UKF (« Unscented Kalman Filter ») ou encore un filtre de Kalman adaptatif.

De nombreuses variantes des relations mises en oeuvre dans le filtre de Kalman existent. En effet, ces relations dépendent du repère dans lequel la position, l'orientation et la vitesse du véhicule sont exprimées. Or d'autres repères sont utilisables à la place du repère $R_T$. Par exemple, on peut citer le repère ECI (Earth Centered Inertial). Le repère ECI n'est pas fixe par rapport à la surface de la terre puisque la terre tourne dans ce repère. Le repère $R_T$ peut aussi être un repère fixe par rapport aux étoiles. Lorsqu'un autre repère est utilisé, il est possible, par un simple changement de repère, de revenir dans la situation décrite ici.

Les relations du filtre de Kalman peuvent aussi contenir une matrice de rotation supplémentaire pour tenir compte du fait que les axes de mesure de l'unité 12 ne sont pas alignés sur les axes du repère $R_b$.

De même, de nombreuses variantes du vecteur d'état $X_{m|m}$ sont possibles. Par exemple lorsque le diamètre de la roue 3 ne varie pas, le coefficient de correction $\delta_{Sr}(m)$ est omis. Le vecteur d'état $X_{m|m}$ peut aussi ne pas comporter de coefficient de correction des biais de l'accéléromètre 14 et du gyromètre 16. Le vecteur d'état $X_{m|m}$ peut aussi comporter des variables d'état supplémentaires.

Ce qui a été précédemment enseigné dans le cas particulier où le sous-module 32 de correction utilise un ou plusieurs filtres de Kalman s'applique aussi à des sous-modules de correction qui construisent les coefficients de correction en utilisant d'autres estimateurs que des filtres de Kalman. De façon générale, ce qui a été décrit ici s'applique à tout sous-module de correction configuré pour mettre à jour les coefficients de correction en utilisant un écart entre :

- une mesure d'une grandeur physique construite à partir de la vitesse angulaire moyenne mesurée par un odomètre, et
- une estimation de cette grandeur physique construite à partir des mesures de l'unité 12.

D'autres modes de réalisation du sous-module 32 sont possibles. Par exemple, en variante, le sous-module 32 est agencé comme décrit dans l'architecture connue sous le nom anglais de « tight coupling ». Cette architecture est décrite plus en détail dans le chapitre 4.1.2 de la thèse Godha2006.

Variantes du procédé :

En variante, il est possible qu'au même instant $t_m$, une nouvelle mesure de l'unité 10 et une nouvelle mesure de l'odomètre 18 soient acquises. Autrement dit, en variante, les instants $tg_i$ et $to_j$ peuvent être concomitants. Dans ce cas, le calculateur 20 exécute une mise à jour des coefficients de correction en fonction à la fois des nouvelles mesures de l'unité 10 et de l'odomètre 18. Par exemple, pour cela, le calculateur 20 calcule un nouveau gain $K_m$ en fonction d'une matrice d'observation formée par la concaténation de la matrice $H_m$ et de la matrice d'observation utilisée pour mettre à jour les coefficients de correction en fonction de la mesure de l'unité 10.

Chaque instant $t_m$ n'est pas nécessairement égal à un instant $t_k$ respectif. En variante, au moins un des instants $t_m$ tombe entre deux instants $t_k$ et $t_{k+1}$. Ce qui a été décrit précédemment peut aussi s'appliquer à ce cas de figure où l'instant $t_m$ est légèrement antérieur à l'instant $t_{k+1}$. Par exemple, pour cela, l'instant $t_m$ est traité comme s'il était égal à l'instant $t_{k+1}$. Ainsi, les coefficients de correction construits à partir des mesures acquises à l'instant $t_m$ sont utilisés pour corriger les estimations du sous-module 30 réalisées pour l'instant $t_{k+1}$. Dans ce cas, l'instant $t_{k+1}$ n'est pas égal à l'instant $t_m$ mais compris entre les instants $t_m$ et $t_{m+1}$.

D'autres modes de réalisation de l'opération 84 sont possibles. Par exemple, dans un mode de réalisation simplifié, le bras de levier $l^b{}_{ob}$ est négligé. Typiquement, cela revient à considérer que la norme du bras de levier $l^b{}_{ob}$ est nulle.

Dans un autre mode de réalisation, la vitesse $V_{odo}(k)$ est construite pour une partie seulement des instants $t_k$ compris dans l'intervalle $[to_{j-1}, to_j]$. Dans ce cas, l'estimation $z_m$ est construite seulement à partir de ces vitesses $V_{odo}(k)$ construites. Cela permet de limiter le nombre de calculs exécutés par le sous-module 30.

Dans une variante de l'opération 104, la transformation de la vitesse angulaire $w_r(m)$ en vitesse $V_r(m)$ est

réalisée par l'odomètre et non pas par le sous-module 32. Dans ce cas, le sous-module 32 fournit le facteur d'échelle $S_r$ et, éventuellement, le coefficient de correction $\delta_{Sr}(m)$ à l'odomètre 18.

D'autres mode de réalisation de l'opération 106 sont possibles. Par exemple, en variante, la roue 3 est une roue qui peut être braquée pour, par exemple, faire tourner le véhicule. Dans ce cas, il est tenu compte de l'angle de braquage de la roue 3 dans le repère $R_b$ lors de la construction de l'estimation $\hat{z}_m$ à partir des mesures de l'unité 12.

Le sous-module 30 peut aussi enregistrer dans une mémoire toutes les vitesses $V_{odo}(k)$ calculées pour chacun des instants $t_k$ compris dans l'intervalle $[to_{j-1}, to_j]$. Ensuite, lors de l'opération 106, le bloc 40 additionne les unes aux autres les différentes vitesses $V_{odo}(k)$ mémorisées puis divise le résultat de cette addition par $N_{moy}$. Dans ce cas, l'addition des différentes vitesses $V_{odo}(k)$ est réalisée par le bloc 40 et non pas par le sous-module 30.

Les différentes variantes décrites ci-dessus pour construire l'estimation $\hat{z}_m$ peuvent être transposées à la construction de la matrice $H_m$.

Dans une variante simplifiée, la matrice $H_m$ est prise égale à la matrice $H_{odo}(m)$ calculée à l'instant $t_m$ par le sous-module 30. Dans ce cas, la variable $H_{moy}$ n'est plus utile.

Dans un autre mode de réalisation, la vitesse $V_{odo}(k)$ ou la vitesse $V_r(m)$ est ajoutée au vecteur d'état du filtre de Kalman et les matrices d'état et d'observation sont modifiées en conséquence. Toutefois, un tel mode de réalisation impose alors d'exécuter le filtre de Kalman à chaque instant $t_k$ ce qui n'est pas toujours souhaitable.

Dans les modes de réalisation précédemment décrits, la grandeur physique dont la mesure est construite à partir de la mesure de l'odomètre 18 est la vitesse $V_r$ de la roue 3. Toutefois, en variante, la grandeur physique est la vitesse de l'unité 12. Dans ce cas, à chaque fois que le calculateur 20 acquière une nouvelle mesure de l'odomètre 18, cette mesure est transformée en une vitesse de l'unité 12 et non pas simplement en une vitesse de la roue 3. La grandeur physique peut aussi être directement la vitesse angulaire de la roue 3.

Ainsi, la grandeur physique est une grandeur physique dont la valeur construite à partir de la mesure de l'odomètre 18 est proportionnelle au cumul de valeurs instantanées de cette même grandeur physique pour différents instants compris dans l'intervalle $[to_{j-1}; to_j]$. Comme illustré ici, cette grandeur physique est donc égale à la moyenne des valeurs instantanées de cette grandeur physique pour différents instants compris dans l'intervalle $[to_{j-1}; to_j]$.

### Variantes du système de localisation :

En variante, le système 6 est équipé de capteurs supplémentaires, comme par exemple un magnétomètre ou un baromètre. Dans ce cas, le sous-module 32 de correction est modifié pour prendre en compte les mesures de ces capteurs supplémentaires pour corriger les estimations brutes délivrées par le sous-module 30 d'intégration.

Le système 6 peut aussi comporter plusieurs odomètres mesurant chacun la vitesse d'une roue respective du véhicule 2. Dans ce cas, ce qui a été décrit précédemment s'applique à chacun des odomètres du véhicule 2.

Dans un autre mode de réalisation, l'unité 10 est omise. Dans ce cas, par exemple, les coefficients de correction sont mis à jour uniquement à partir des mesures de l'odomètre 18.

### Autres variantes :

Le système 6 décrit ici peut être utilisé dans tout véhicule qui roule sur le sol et dont l'une des roues en contact avec le sol est équipée d'un odomètre. Ainsi, le véhicule peut aussi être un train par exemple.

Dans un mode de réalisation simplifié, le système 2 ne délivre pas la vitesse du véhicule 2. Dans ce cas, le module 26 peut être simplifié.

### Chapitre III : Avantages des modes de réalisations décrits

Le système de localisation décrit ici permet de déterminer plus précisément la position et l'orientation du véhicule 2. Cette amélioration est due au fait que pour déterminer la position et l'orientation du véhicule, le système utilise l'écart entre :

- une mesure d'une grandeur physique construite à partir de la mesure de l'odomètre 18, et
- une moyenne arithmétique de plusieurs estimations de la valeur instantanée de cette même grandeur physique construites à partir de mesures de l'unité 12 de navigation inertielle.

Autrement dit, le système de localisation décrit ici tient compte du fait que la mesure délivrée par l'odomètre est une mesure moyenne sur l'intervalle $[to_{j-1}, to_j]$. Cela permet en fin de compte d'obtenir une précision et une orientation du véhicule 2 plus précise.

Le fait que la valeur instantanée $V_{odo}(k)$ de la grandeur physique soit construite entre les instants $to_{j-1}$ et $to_j$ par le sous-module 30 d'intégration permet d'exécuter le bloc 40 à une fréquence inférieure à la fréquence d'exécution du sous-module 30. Cela permet donc d'économiser des ressources informatiques et de l'énergie.

L'utilisation de la matrice $H_m$ qui est une matrice moyenne des différentes matrices $H_{odo}(k)$ construites entre les instants $to_{j-1}$ et $to_j$ permet de corriger encore plus finement les coefficients de correction et donc d'améliorer encore plus la précision de la position et de l'orientation déterminées.

Utiliser à la fois les mesures de l'odomètre 18 et de l'unité 10 de géolocalisation par satellites pour déterminer la position et l'orientation du véhicule permet aussi d'améliorer la précision du système de géolocalisation.

## Revendications

1. Procédé de détermination de la position et de l'orientation d'un véhicule, ce procédé comportant les étapes suivantes :

   - à chaque instant $t_k$ d'une suite ordonnée temporellement d'instants $\{0, t_1, t_2, ..., t_{k-1}, t_k, ...\}$, l'acquisition (78), par un calculateur électronique, d'une mesure de l'accélération et de la vitesse angulaire du véhicule réalisée par une unité de navigation inertielle,
   - pour chaque instant $t_k$, la construction (80), par un module d'intégration de mesures inertielles, d'une position et d'une orientation estimées du véhicule à partir d'une précédente position et d'une précédente orientation du véhicule et en utilisant les mesures de l'accélération et de la vitesse angulaire acquises à l'instant $t_k$,
   - à chaque instant $to_j$ d'une suite ordonnée temporellement d'instants $\{0, to_1, to_2, ..., to_{j-1}, to_j, ...\}$, l'acquisition (101) d'une nouvelle mesure d'une vitesse angulaire d'une roue du véhicule autour de son axe de rotation, cette vitesse angulaire acquise à l'instant $to_j$ étant une vitesse angulaire moyenne de la roue dans l'intervalle $[to_{j-1}, to_j]$ délivrée par un odomètre, la fréquence des instants $to_j$ étant inférieure à la fréquence des instants $t_k$ de sorte que plusieurs instants $t_k$ sont intercalés entre les instants $to_{j-1}$ et $to_j$ immédiatement consécutifs, et
   - pour chaque instant $to_j$ :

     - la construction (104) d'une mesure d'une grandeur physique à partir de la vitesse angulaire moyenne acquise à l'instant $to_j$, cette mesure d'une grandeur physique étant proportionnelle au cumul des valeurs instantanées de cette même grandeur physique aux instants $t_k$ compris entre les instants $to_{j-1}$ et $to_j$, cette grandeur physique appartenant au groupe composé de la vitesse de déplacement linéaire de la roue, de la vitesse de l'unité de navigation inertielle et de la vitesse angulaire de la roue,
     - la construction (84), pour plusieurs instants $t_k$ compris entre les instants $to_{j-1}$ et $to_j$, d'une estimation de la valeur instantanée de la grandeur physique à partir des mesures de l'unité de navigation inertielle acquises à cet instant $t_k$, puis
     - la construction (106) d'une estimation de cette même grandeur physique à l'instant $to_j$ obtenue en exécutant le calcul de la moyenne arithmétique desdites valeurs instantanées construites pour les instants $t_k$ compris entre les instants $to_{j-1}$ et $to_j$ et sans utiliser la mesure de la vitesse angulaire moyenne acquise à l'instant $to_j$, puis
     - le calcul (108) d'un écart entre cette mesure et cette estimation de la grandeur physique à l'instant $to_j$ obtenue en exécutant le calcul de la moyenne arithmétique desdites valeurs instantanées,

   - la correction (110), par un module de correction et en fonction de l'écart calculé pour l'instant $to_j$, des position et orientation estimées pour un instant $t_k$ égale ou postérieur à l'instant $to_j$, pour obtenir une position corrigée et une orientation corrigée.

2. Procédé selon la revendication 1, dans lequel :

   - pour chaque instant $to_j$, le module de correction met à jour (108) des coefficients de correction de la position et de l'orientation estimées par le module d'intégration, en fonction de l'écart calculé pour cet instant $to_j$, ces coefficients de correction n'étant ensuite plus mis à jour en fonction de l'écart calculé à partir la vitesse angulaire mesurée par l'odomètre jusqu'au prochain instant $to_{j+1}$, puis
   - le module de correction utilise ces coefficients de correction mis à jour pour l'instant $to_j$ pour corriger (110) les position et orientation estimées par le module d'intégration pour un instant $t_k$ égale à l'instant $to_j$ ou compris entre les instants $to_j$ et $to_{j+1}$, et
   - pour plusieurs instants $t_k$ compris entre les instants $to_j$ et $to_{j+1}$, le module d'intégration construit l'estimation de la valeur instantanée de la grandeur physique à cet instant $t_k$ en utilisant les mesures de l'accélération et de la vitesse angulaire acquises à cet instant $t_k$.

3. Procédé selon la revendication 2, dans lequel, à chaque instant $to_j$, la mise à jour des coefficients de correction de la position et de l'orientation estimées par le module d'intégration, en fonction de l'écart calculé pour cet instant $to_j$, est réalisée en exécutant un filtre de Kalman dont le vecteur d'état comporte ces coefficients de correction.

4. Procédé selon la revendication 3, dans lequel :

- pour plusieurs instants $t_k$ compris entre les instants $to_{j-1}$ et $to_j$, le module d'intégration construit (84) une matrice d'observation de la valeur instantanée de la grandeur physique à cet instant $t_k$, à partir des mesures de l'accélération et de la vitesse angulaire acquises à cet instant $t_k$, puis
- pour l'instant $to_j$, le module de correction:

  - calcule (106) une matrice d'observation de la valeur moyenne de la grandeur physique en calculant la moyenne arithmétique des matrices d'observation de la valeur instantanée de cette grandeur physique construites pour les instants $t_k$ compris entre les instants $to_{j-1}$ et $to_j$, puis
  - calcule (108) un gain du filtre de Kalman à partir de cette matrice d'observation de la valeur moyenne de la grandeur physique, puis
  - met à jour (108) les coefficients de correction en fonction de ce gain calculé.

5. Procédé selon la revendication 3 ou 4, dans lequel le filtre de Kalman est un filtre ESKF (Error-State Kalman Filter).

6. Procédé selon l'une quelconque des revendications précédentes, dans lequel le procédé comporte :

- à chaque instant $tg_i$ d'une suite ordonnée temporellement d'instants $\{0, tg_1, tg_2, ..., tg_{i-1}, tg_i, ...\}$, l'acquisition d'une mesure de la position ou de la vitesse du véhicule réalisée par une unité de géolocalisation par satellite,
- pour chaque instant $tg_i$, le calcul d'un écart entre la position ou la vitesse mesurée acquise à cet instant $tg_i$ et, respectivement, une position ou une vitesse estimée par le module d'intégration pour ce même instant $tg_i$ sans prendre en compte la mesure de l'unité de géolocalisation par satellite acquise à cet instant $tg_i$, puis
- la correction, par le module de correction et en fonction de l'écart calculé pour l'instant $tg_i$, des position et orientation estimées pour un instant $t_k$ égale ou postérieur à l'instant $tg_i$, pour obtenir une position corrigée et une orientation corrigée.

7. Support (24) d'enregistrement d'informations, lisible par un microprocesseur, **caractérisé en ce que** ce support comporte des instructions pour la réalisation d'un procédé conforme à l'une quelconque des revendications précédentes, lorsque ces instructions sont exécutées par le microprocesseur.

8. Système de localisation, apte à être fixé sur un véhicule, pour déterminer la position et l'orientation de ce véhicule, ce système de localisation comportant :

- une unité (12) de navigation inertielle contenant un accéléromètre (14) et un gyromètre (16) aptes à mesurer l'accélération et de la vitesse angulaire du véhicule à chaque instant $t_k$ d'une suite ordonnée temporellement d'instants $\{0, t_1, t_2, ..., t_{k-1}, t_k, ...\}$,
- un odomètre (18) apte à mesurer une vitesse angulaire d'une roue du véhicule autour de son axe de rotation à chaque instant $to_j$ d'une suite ordonnée temporellement d'instants $\{0, to_1, to_2, ..., to_{j-1}, to_j, ...\}$, cette vitesse angulaire mesurée à l'instant $to_j$ étant une vitesse angulaire moyenne de la roue dans l'intervalle $[to_{j-1}, to_j]$, la fréquence des instants $to_j$ étant inférieure à la fréquence des instants $t_k$ de sorte que plusieurs instants $t_k$ sont intercalés entre les instants $to_{j-1}$ et $to_j$ immédiatement consécutifs,
- un calculateur électronique (20) configuré pour déterminer la position et l'orientation du véhicule à partir des mesures de l'accéléromètre (14), du gyromètre (16) et de l'odomètre (18),

**caractérisé en ce que** le calculateur électronique (20) est configuré pour exécuter un procédé conforme à l'une quelconque des revendications 1 à 6.

**Patentansprüche**

1. Verfahren zur Bestimmung der Position und der Orientierung eines Fahrzeugs, wobei dieses Verfahren die folgenden Schritte umfasst:

- zu jedem Zeitpunkt $t_k$ einer zeitlich geordneten Folge von Zeitpunkten $\{0, t_1, t_2, ..., t_{k-1}, t_k, ...\}$ das Erfassen

(78), durch einen elektronischen Rechner, eines Messwerts der Beschleunigung und der Winkelgeschwindigkeit des Fahrzeugs, das von einer Trägheitsnavigationseinheit ausgeführt wird,

- für jeden Zeitpunkt $t_k$ das Ermitteln (80), durch ein Integrationsmodul zur Integration von Trägheitsmesswerten, einer geschätzten Position und Orientierung des Fahrzeugs ausgehend von einer vorhergehenden Position und von einer vorhergehenden Orientierung des Fahrzeugs und unter Verwendung der zu dem Zeitpunkt $t_k$ erfassten Messwerte der Beschleunigung und der Winkelgeschwindigkeit,

- zu jedem Zeitpunkt $to_j$ einer zeitlich geordneten Folge von Zeitpunkten $\{0, to_1, to_2, ..., to_{j-1}, to_j, ...\}$ das Erfassen (101) eines neuen Messwerts einer Winkelgeschwindigkeit eines Rads des Fahrzeugs um seine Rotationsachse, wobei diese zu dem Zeitpunkt $to_j$ erfasste Winkelgeschwindigkeit eine mittlere Winkelgeschwindigkeit des Rads in dem Intervall $[to_{j-1}, to_j]$ ist, die von einem Odometer ausgegeben wird, wobei die Frequenz der Zeitpunkte $to_j$ geringer als die Frequenz der Zeitpunkte $t_k$ ist, so dass mehrere Zeitpunkte $t_k$ zwischen die unmittelbar aufeinander folgenden Zeitpunkte $to_{j-1}$ und $to_j$ gesetzt sind, und

- für jeden Zeitpunkt $to_j$:

    - das Ermitteln (104) eines Messwerts einer physikalischen Größe ausgehend von der zu dem Zeitpunkt $to_j$ erfassten mittleren Winkelgeschwindigkeit, wobei dieser Messwert einer physikalischen Größe proportional zu der Summe der Momentanwerte dieser selben physikalischen Größe zu den Zeitpunkten $t_k$ ist, die zwischen den Zeitpunkten $to_{j-1}$ und $to_j$ liegen, wobei diese physikalische Größe zu der Gruppe gehört, die aus der linearen Bewegungsgeschwindigkeit des Rads, der Geschwindigkeit der Trägheitsnavigationseinheit und der Winkelgeschwindigkeit des Rads besteht,

    - das Ermitteln (84), für mehrere Zeitpunkte $t_k$, die zwischen den Zeitpunkten $to_{j-1}$ und $to_j$ liegen, eines Schätzwerts des Momentanwerts der physikalischen Größe ausgehend von den zu diesem Zeitpunkt $t_k$ erfassten Messwerten der Trägheitsnavigationseinheit, dann

    - das Ermitteln (106) eines Schätzwerts dieser selben physikalischen Größe zu dem Zeitpunkt $to_j$, der erhalten wird, indem die Berechnung des arithmetischen Mittels der für die Zeitpunkte $t_k$, die zwischen den Zeitpunkten $to_{j-1}$ und $to_j$ liegen, ermittelten Momentanwerte durchgeführt wird, und ohne den zu dem Zeitpunkt $to_j$ erfassten Messwert der mittleren Winkelgeschwindigkeit zu verwenden, dann

    - das Berechnen (108) einer Abweichung zwischen diesem Messwert und diesem Schätzwert der physikalischen Größe zu dem Zeitpunkt $to_j$, die erhalten wird, indem die Berechnung des arithmetischen Mittels der Momentanwerte durchgeführt wird,

- das Korrigieren (110), durch ein Korrekturmodul und in Abhängigkeit von der für den Zeitpunkt $to_j$ berechneten Abweichung, der geschätzten Position und Orientierung für einen Zeitpunkt $t_k$ gleich oder nach dem Zeitpunkt $to_j$, um eine korrigierte Position und eine korrigierte Orientierung zu erhalten.

2. Verfahren nach Anspruch 1, wobei:

    - das Korrekturmodul für jeden Zeitpunkt $to_j$ Korrekturkoeffizienten zur Korrektur der von dem Integrationsmodul geschätzten Position und Orientierung in Abhängigkeit von der für diesen Zeitpunkt $to_j$ berechneten Abweichung aktualisiert (108), wobei diese Korrekturkoeffizienten anschließend nicht mehr aktualisiert werden in Abhängigkeit von der ausgehend von der von dem Odometer gemessenen Geschwindigkeit berechneten Abweichung bis zu dem nächsten Zeitpunkt $to_{j+1}$, dann

    - das Korrekturmodul diese für den Zeitpunkt $to_j$ aktualisierten Korrekturkoeffizienten verwendet, um die von dem Integrationsmodul geschätzte Position und Orientierung für einen Zeitpunkt $t_k$ zu korrigieren (110), der gleich dem Zeitpunkt $to_j$ ist oder zwischen den Zeitpunkten $to_j$ und $to_{j+1}$ liegt, und

    - das Integrationsmodul für mehrere Zeitpunkte $t_k$, die zwischen den Zeitpunkten $to_j$ und $to_{j+1}$ liegen, den Schätzwert des Momentanwerts der physikalischen Größe zu diesem Zeitpunkt $t_k$ ermittelt, indem es die zu diesem Zeitpunkt $t_k$ erfassten Messwerte der Beschleunigung und der Winkelgeschwindigkeit verwendet.

3. Verfahren nach Anspruch 2, wobei, zu jedem Zeitpunkt $to_j$, die Aktualisierung der Korrekturkoeffizienten zur Korrektur der von dem Integrationsmodul geschätzten Position und Orientierung in Abhängigkeit von der für diesen Zeitpunkt $to_j$ berechneten Abweichung, ausgeführt wird, indem ein Kalman-Filter durchgeführt wird, dessen Zustandsvektor diese Korrekturkoeffizienten umfasst.

4. Verfahren nach Anspruch 3, wobei:

    - das Integrationsmodul für mehrere Zeitpunkte $t_k$, die zwischen den Zeitpunkten $to_{j-1}$ und $to_j$ liegen, eine Beobachtungsmatrix des Momentanwerts der physikalischen Größe zu diesem Zeitpunkt $t_k$ ausgehend von den zu

diesem Zeitpunkt $t_k$ erfassten Messwerten der Beschleunigung und der Winkelgeschwindigkeit ermittelt (84), dann
- das Korrekturmodul für den Zeitpunkt $to_j$:

    - eine Beobachtungsmatrix des Mittelwerts der physikalischen Größe berechnet (106), indem es das arithmetische Mittel der Beobachtungsmatrizen des Momentanwerts dieser physikalischen Größe berechnet, die für die Zeitpunkte $t_k$ ermittelt werden, die zwischen den Zeitpunkten $to_{j-1}$ und $to_j$ liegen, dann
    - eine Verstärkung des Kalman-Filters ausgehend von dieser Beobachtungsmatrix des Mittelwerts der physikalischen Größe berechnet (108), dann
    - die Korrekturkoeffizienten in Abhängigkeit von dieser berechneten Verstärkung aktualisiert (108).

5. Verfahren nach Anspruch 3 oder 4, wobei das Kalman-Filter ein EKSF-Filter (Error State Kalman Filter) ist.

6. Verfahren nach einem der vorhergehenden Ansprüche, wobei das Verfahren umfasst:

    - zu jedem Zeitpunkt $tg_i$ einer zeitlich geordneten Folge von Zeitpunkten $\{0, tg_1, tg_2, ..., tg_{i-1}, tg_i, ...\}$ das Erfassen eines Messwerts der Position oder der Geschwindigkeit des Fahrzeugs, das von einer satellitengestützten Geolokalisierungseinheit ausgeführt wird,
    - für jeden Zeitpunkt $tg_i$, das Berechnen einer Abweichung zwischen der zu diesem Zeitpunkt $tg_i$ erfassten Position oder gemessenen Geschwindigkeit und einer von dem Integrationsmodul für diesen selben Zeitpunkt $tg_i$ geschätzten Position beziehungsweise Geschwindigkeit, ohne den zu diesem Zeitpunkt $tg_i$ erfassten Messwert der satellitengestützten Geolokalisierungseinheit zu berücksichtigen, dann
    - das Korrigieren, durch das Korrekturmodul und in Abhängigkeit von der für den Zeitpunkt $to_i$ berechneten Abweichung, der für einen Zeitpunkt $t_k$ gleich oder nach dem Zeitpunkt $to_i$ geschätzten Position und Orientierung, um eine korrigierte Position und eine korrigierte Orientierung zu erhalten.

7. Medium (24) zur Aufzeichnung von Informationen, das von einem Mikroprozessor gelesen werden kann, **dadurch gekennzeichnet, dass** es Anweisungen umfasst, die bei der Ausführung dieser Anweisungen durch den Mikroprozessor ein Verfahren nach einem der vorhergehenden Ansprüche ausführen.

8. Ortungssystem, das geeignet ist, an einem Fahrzeug befestigt zu werden, um die Position und die Orientierung dieses Fahrzeugs zu bestimmen, wobei dieses Ortungssystem umfasst:

    - eine Trägheitsnavigationseinheit (12), die einen Beschleunigungsmesser (14) und ein Gyrometer (16) beinhaltet, die geeignet sind, die Beschleunigung und die Winkelgeschwindigkeit des Fahrzeug zu jedem Zeitpunkt $t_k$ einer zeitlich geordneten Folge von Zeitpunkten $\{0, t_1, t_2, ..., t_{k-1}, t_k, ...\}$ zu messen,
    - ein Odometer (18), das geeignet ist, eine Winkelgeschwindigkeit eines Rads des Fahrzeugs um seine Rotationsachse zu jedem Zeitpunkt $to_j$ einer zeitlich geordneten Folge von Zeitpunkten $\{0, to_1, to_2, ..., to_{j-1}, to_j, ...\}$ zu messen, wobei diese zu dem Zeitpunkt $to_j$ gemessene Winkelgeschwindigkeit eine mittlere Winkelgeschwindigkeit des Rads in dem Intervall $[to_{j-1}, to_j]$ ist, wobei die Frequenz der Zeitpunkte $to_j$ geringer als die Frequenz der Zeitpunkte $t_k$ ist, so dass mehrere Zeitpunkte $t_k$ zwischen die unmittelbar aufeinander folgenden Zeitpunkte $to_{j-1}$ und $to_j$ gesetzt sind,
    - einen elektronischen Rechner (20), der dazu ausgestaltet ist, die Position und die Orientierung des Fahrzeugs ausgehend von den Messwerten des Beschleunigungsmessers (14), des Gyrometers (16) und des Odometers (18) zu bestimmen,

**dadurch gekennzeichnet, dass** der elektronische Rechner (20) dazu ausgestaltet ist, ein Verfahren nach einem der Ansprüche 1 bis 6 auszuführen.

## Claims

1. Method for determining the position and the orientation of a vehicle, this method comprising the following steps:

    - an electronic computer acquiring (78), at each instant $t_k$ of a temporally ordered series of instants $\{0, t_1, t_2, ..., t_{k-1}, t_k, ...\}$, a measurement of the acceleration and of the angular speed of the vehicle carried out by an inertial navigation unit,
    - an inertial measurement integration module constructing (80), for each instant $t_k$, an estimated position and orientation of the vehicle on the basis of a previous position and of a previous orientation of the vehicle and using the measurements of the acceleration and of the angular speed acquired at the instant $t_k$,
- acquiring (101), at each instant $to_j$ of a temporally ordered series of instants $\{0, to_1, to_2, ..., to_{j-1}, to_j, ...\}$, a new measurement of an angular speed of a wheel of the vehicle around its axis of rotation, this angular speed acquired at the instant $to_j$ being an average angular speed of the wheel in the interval $[to_{j-1}, to_j]$ delivered by an odometer, the frequency of the instants $to_j$ being less than the frequency of the instants $t_k$, so that several instants $t_k$ are interspersed between the immediately consecutive instants $to_{j-1}$ and $to_j$, and
- for each instant $to_j$:

> - constructing (104) a measurement of a physical quantity on the basis of the average angular speed acquired at the instant $to_j$, this measurement of a physical quantity being proportionate to the sum of the instantaneous values of this same physical quantity at the instants $t_k$ ranging between the instants $to_{j-1}$ and $to_j$, this physical quantity belonging to the group composed of the linear movement speed of the wheel, the speed of the inertial navigation unit and the angular speed of the wheel,
> - constructing (84), for several instants $t_k$ ranging between the instants $to_{j-1}$ and $to_j$, an estimate of the instantaneous value of the physical quantity on the basis of the measurements of the inertial navigation unit acquired at this instant $t_k$, then
> - constructing (106) an estimate of this same physical quantity at the instant $to_j$ obtained by executing the computation of the arithmetic mean of said instantaneous values constructed for the instants $t_k$ ranging between the instants $to_{j-1}$ and $to_j$ and without using the measurement of the average angular speed acquired at the instant $to_j$, then
> - computing (108) a deviation between this measurement and this estimate of the physical quantity at the instant $to_j$ obtained by executing the computation of the arithmetic mean of said instantaneous values,

> - a correction module correcting (110), as a function of the deviation computed for the instant $to_j$, estimated positions and orientations for an instant $t_k$ equal or subsequent to the instant $to_j$, in order to obtain a corrected position and a corrected orientation.

2. Method according to Claim 1, wherein:

> - for each instant $to_j$, the correction module updates (108) correction coefficients of the position and of the orientation estimated by the integration module, as a function of the deviation computed for this instant $to_j$, these correction coefficients then no longer being updated as a function of the deviation computed on the basis of the angular speed measured by the odometer until the next instant $to_{j+1}$, then
> - the correction module uses these updated correction coefficients for the instant $to_j$ to correct (110) the positions and orientations estimated by the integration module for an instant $t_k$ equal to the instant $to_j$ or ranging between the instants $to_j$ and $to_{j+1}$, and
> - for several instants $t_k$ ranging between the instants $to_j$ and $to_{j+1}$, the integration module constructs the estimate of the instantaneous value of the physical quantity at this instant $t_k$ by using the measurements of the acceleration and of the angular speed acquired at this instant $t_k$.

3. Method according to Claim 2, wherein, at each instant $to_j$, the updating of the correction coefficients of the position and of the orientation estimated by the integration module, as a function of the deviation computed for this instant $to_j$, is carried out by executing a Kalman filter, the state vector of which comprises these correction coefficients.

4. Method according to Claim 3, wherein:

> - for several instants $t_k$ ranging between the instants $to_{j-1}$ and $to_j$, the integration module constructs (84) an observation matrix of the instantaneous value of the physical quantity at this instant $t_k$, on the basis of the measurements of the acceleration and of the angular speed acquired at this instant $t_k$, then
> - for the instant $to_j$, the correction module:

>> - computes (106) an observation matrix of the mean value of the physical quantity by computing the arithmetic mean of the observation matrices of the instantaneous value of this physical quantity constructed for the instants $t_k$ ranging between the instants $to_{j-1}$ and $to_j$, then
>> - computes (108) a gain of the Kalman filter on the basis of this observation matrix of the mean value of the physical quantity, then
>> - updates (108) the correction coefficients as a function of this computed gain.

5. Method according to Claim 3 or 4, wherein the Kalman filter is an ESKF (Error-State Kalman Filter) filter.

6. Method according to any one of the preceding claims, wherein the method comprises:

- acquiring, at each instant $tg_i$ of a temporally ordered series of instants $\{0, tg_1, tg_2, ..., tg_{i-1}, tg_i, ...\}$, a measurement of the position or of the speed of the vehicle carried out by a satellite geolocation unit,
- computing, for each instant $tg_i$, a deviation between the measured position or the measured speed acquired at this instant $tg_i$ and, respectively, a position or a speed estimated by the integration module for this same instant $tg_i$, without taking into account the measurement of the satellite geolocation unit acquired at this instant $tg_i$, then
- the correction module correcting, as a function of the deviation computed for the instant $tg_i$, estimated positions and orientations for an instant $t_k$ equal or subsequent to the instant $tg_i$, in order to obtain a corrected position and a corrected orientation.

7. Microprocessor-readable information recording medium (24), **characterized in that** this medium comprises instructions for carrying out a method according to any one of the preceding claims, when these instructions are executed by the microprocessor.

8. Location system, capable of being mounted on a vehicle, for determining the position and the orientation of this vehicle, this location system comprising:

- an inertial navigation unit (12) containing an accelerometer (14) and a gyrometer (16) capable of measuring the acceleration and the angular speed of the vehicle at each instant $t_k$ of a temporally ordered series of instants $\{0, t_1, t_2, ..., t_{k-1}, t_k, ...\}$,
- an odometer (18) capable of measuring an angular speed of a wheel of the vehicle around its axis of rotation at each instant $to_j$ of a temporally ordered series of instants $\{0, to_1, to_2, ..., to_{j-1}, to_j, ...\}$, this angular speed measured at the instant $to_j$ being an average angular speed of the wheel in the interval $[to_{j-1}, to_j]$, the frequency of the instants $to_j$ being less than the frequency of the instants $t_k$, so that several instants $t_k$ are interspersed between the immediately consecutive instants $to_{j-1}$ and $to_j$,
- an electronic computer (20) configured to determine the position and the orientation of the vehicle on the basis of the measurements of the accelerometer (14), of the gyrometer (16) and of the odometer (18),

**characterized in that** the electronic computer (20) is configured to execute a method according to any one of Claims 1 to 6.

Fig. 1

Fig. 2

Fig. 3

Fig. 4

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2017122770 A1
- US 2018087905 A1
- CN 110988951 A

**Littérature non-brevet citée dans la description**

- **S. GODHA.** Performance Evaluation of Low Cost MEMS-Based IMU Integrated With GPS for Land Vehicle Navigation Application. *PhD report,* 2006
- **P. GROVES.** Principles of GNSS, Inertial and multi-sensor integrated navigation systems. Artech House, 2013